# EUROPEAN PATENT SPECIFICATION

(11) **EP 3 760 029 B1**
(45) Date of publication and mention of the grant of the patent: **12.05.2021**
(21) Application number: 20183559.2
(22) Date of filing: 01.07.2020
(51) Int. Cl.: A01F 15/07

(54) **AGRICULTURAL ROUND BALER**
LANDWIRTSCHAFTLICHE RUNDBALLENPRESSE
ROTO-PRESSE AGRICOLE

(30) Priority: 02.07.2019 GB 201909536
(43) Date of publication of application: 06.01.2021
(73) Proprietor: Kuhn-Geldrop B.V., 5667 KP Geldrop (NL)
(72) Inventor: van Doormaal, Thomas, Petrus, Lambertus, 5089NK Haghorst (NL)
(74) Representative: Raynor, Simon Mark

(56) References cited:
- EP-A1- 2 517 550
- EP-A1- 3 459 342
- DE-A1- 19 711 164
- US-A1- 2015 373 914

## Description

The present invention relates to an agricultural round baler and to a method of transferring a spare roll of binding material from a storage position to a feeding position in an agricultural round baler. In particular, but not exclusively, the invention relates to an agricultural round baler that includes a support structure that allows for easy loading of a spare roll of binding material into a binding device of the baler.

Agricultural round balers that form cylindrical bales of agricultural crop material are well known, and such bales are usually referred to as "round" bales. Typically, a round baler has a bale chamber, a feed device for feeding crop material into the bale chamber, and an arrangement of pressing elements, for example a set of belts and/or a series of circumferentially spaced rollers, which define a part-cylindrical circumferential surface of the bale chamber within which a round bale can be formed by compression. As is well known in the art, such round balers can be of the "fixed chamber" or "variable chamber type", and the present invention is applicable to both types.

After compressing the crop material to form a bale in the bale chamber, the bale has to be bound with binding material (which may be net or film) in order to keep the compressed crop material together and under pressure. After binding, the bale can be ejected from the bale chamber.

When the bale material in the bale chamber is sufficiently compressed the binding material is introduced into the bale chamber through an opening between the pressing elements and is wrapped around the compressed bale by rotating the bale in the bale chamber. The binding material is wrapped around the bale for several turns (typically 2-3 turns for net binding material or 4-5 turns or more for film binding material). The binding material holds the compressed bale material in its compressed round shape, after which the bale can be ejected by opening the tailgate of the bale chamber.

The binding material, which could be net or film, is supplied on a roll from where it is pulled into the bale chamber during the wrapping/binding of the bale. When the roll of binding material is depleted it needs to be replaced. Most of the balers have storage places for spare rolls. The spare rolls may be stored either by the side of the baler (in a plane parallel to the driving direction) or parallel to the roll in the binding device.

In recent years, rolls of binding material have tended to get larger and heavier, so that they can be replaced less frequently. This is especially true with rolls of film binding material. Such a roll can have a weight of 40kg or more. This can cause manual handling problems and potentially can cause accidents or injury.

Many attempts have been made to ease the labour required to bring a spare roll of binding material into the binding device.

EP3459342A1 discloses a round baler with a binding material support comprising two support rollers and a hinged loading arm. The support is mechanically very complex and therefore expensive and difficult to manufacture and maintain.

DE19711164 discloses a round baler with a hinged loading arm that can be pivoted from a storage position to a transfer position. The mechanism is again relatively complex, which adds to the weight and cost of the baler.

EP1602270 discloses a binding material support wherein the spare roll is stored in a position that is parallel and adjacent to the binding device. Due to the elevated height of the binding device, this can cause manual handling risks when lifting the roll into the 'spare' position.

It is an object of the present invention to provide a round baler that mitigates one or more of the aforesaid problems.

Aspects of the invention are laid out in the independent claims.

According to one aspect of the invention there is provided an agricultural round baler comprising:
- a bale chamber including a plurality of pressing elements for pressing a crop material to form a bale, said bale chamber having a rotational axis,
- a feed mechanism for feeding crop material into the bale chamber,
- a binding apparatus for feeding a binding material into the bale chamber during a binding operation to bind a bale in the bale chamber, said binding apparatus including an unwind station for supporting a roll of binding material in a feeding position in which a longitudinal axis of the roll is substantially parallel to the rotational axis of the bale chamber, said unwind station enabling rotation of the roll while binding material is drawn from the roll during the binding operation,
- and a support structure for supporting a spare roll of binding material in a storage position in which the spare roll is supported adjacent a side of the baler and optionally a longitudinal axis of the spare roll lies in a plane that is substantially perpendicular to the rotational axis of the bale,
- wherein the support structure includes a first support element for supporting a first end of the spare roll in the storage position and a second support element for supporting a second end of the spare roll in the storage position,
- wherein the first support element is located adjacent an end of the unwind station and the second support element comprises a fixed support that is located adjacent the side of the baler,
- wherein the first support element is configured to support the first end of the spare roll while the second end of the spare roll is lifted away from the second support element and the spare roll is moved from the storage position to a loading position in which the spare roll is substantially aligned with the unwind station, enabling the spare roll to be moved axially from the loading position to the feeding position.

The invention provides a round baler with a support structure that is simple to install, manufacture and maintain. Advantageously the invention allows a human operator to transfer the spare roll from the storage position to a loading position by lifting only the second end of the spare roll while the first end remains supported by the first support element. The operator therefore only has to lift half of the weight of the spare roll and the roll is guided correctly into the loading position by the first support element. Once the spare roll is in the loading position it can be readily pushed into the feeding position in the bale binding apparatus ready for use. The loading of a new roll of binding material is therefore made easier and safer and the risk of accidents is reduced.

It should be noted that the binding material may comprise net or film binding material. The round baler may be a fixed or variable chamber baler. The compression elements may comprise belts and/or rollers. The first and second support elements may comprise first and second ends of a unitary support structure.

Optional features of the invention are laid out in the dependent claims.

Optionally, the first support element and the unwind station are located at substantially the same height. This allows the spare baler to be transferred horizontally from the loading position to the feeding position.

Optionally, the second support element is located at a lower height than the first support element. This allows the operator to reach the second end of the spare roll more easily when transferring the spare roll from the storage position to the loading position. The second support element is preferably located behind the first support element (towards the rear of the baler).

Optionally, the second support element is located at a height of less than 600mm above ground level. As a roll of binding material typically has a length of 600mm, this allows an operator to load a spare roll onto the support structure by resting the first end of the roll on the ground and lifting the second end onto the second support element, and then lifting the first end onto the first support element, so that the operator never has to lift more than half the weight of the roll.

Optionally, the first support element is configured to support the first end of the spare roll while enabling the spare roll to be rotated about a vertical axis from the storage position to the loading position. The first support element thus supports and guides the spare roll as it is manoeuvred into the loading position. This arrangement also ensure that the operator does not have to lift more than half the weight of the roll.

Optionally, the first support element is configured to enable the spare roll to be rotated about a vertical axis through an angle in the range 80° to 100°, or 85° to 95°. Typically, the first support element is configured to enable the spare roll to be rotated about a vertical axis through an angle of about 90° from the storage position adjacent the side of the baler to the loading position aligned with the unwind station.

Optionally, the first support element is configured to enable the spare roll to be rotated about a horizontal axis, optionally through an angle in the range 30° to 60°, or 40° to 50°, from the storage position to the loading position. Typically, the first support element is configured to enable the spare roll to be rotated about a horizontal axis through an angle of about 45° from the storage position adjacent the side of the baler to the loading position aligned with the unwind station

Optionally, the first support element comprises a pair of lateral support members and optionally a base support member. The lateral support members guide the spare roll and prevent lateral movement of the spare roll relative to the base support member. The optional base support member, which may typically be substantially or partially horizontal, supports at least part of the weight of the spare roll. The first support member may for example be substantially U-shaped or J-shaped (for example either a round-bottomed U-shape or J-shape or a square-bottomed U-shape), wherein the lowest part of the U-shape comprises the base support member and the two upper arms of the U-shape comprise the lateral support members. Alternatively, the first support member may be substantially L-shaped, wherein the lowest part of the L-shape comprises the base support member, the upper arm of the L-shape comprises one lateral support member, and a structure to which the first support member is attached (for example the frame of the baler) comprises the other lateral support member. Alternatively, the first support element may be V-shaped, wherein the arms of the V-shaped support element support the weight of the spare roll and prevent lateral movement of the spare roll.

Optionally, the lateral support members are configured to accommodate rotation of the spare roll about a vertical axis from the storage position to the loading position. For example, if the spare roll has a diameter of 300mm, and the lateral support members are vertical they may have a spacing of at least 420mm to allow the spare roll to be rotated relative to the first support element through an angle of 45° either side of a median position (i.e. through a total angle of 90°). Alternatively, if the lateral support members are inclined outwards (e.g. if the first support member is V-shaped or J-shaped), rotation of the spare roll can be accommodated by allowing the roll to rise up within the first support element.

Optionally, the first support element is a fixed support element located adjacent the side of the baler. This provides a very simple and effective structure with no moving parts and minimal maintenance requirements.

Optionally, the first support element extends outwards from the side of the baler at an angle of 45-60 degrees relative to a plane that is perpendicular to the rotational axis of the bale, and preferably at an angle of 50-55 degrees.

Optionally, the first support element is a movable support that is configured to pivot about a vertical axis. This provides an alternative option for supporting the first end of the spare roll while the spare roll is rotated and manoeuvred into the loading position. The first support element may be configured to pivot about a vertical axis through an angle in the range 80° to 100°, typically about 90°.

Optionally, the first support element is U-shaped, J-shaped or V-shaped to effectively support and guide the first end of the spare roll.

Optionally, the agricultural round baler includes at least one conveyor element adjacent the unwind station that facilitates axial movement of the spare roll from the loading position to the feeding position. Optionally, the conveyor element comprises a roller or a wheel.

Optionally, the agricultural round baler includes a stop element adjacent an end of the unwind station, wherein the stop element is configurable in a first configuration to restrict axial movement of a roll in the feeding position or in a second configuration to allow movement of a spare roll from the loading position to the feeding position. Optionally, the stop element may be removable.

Optionally, a support structure is provided on both sides of the baler.

According to another aspect of the invention there is provided a method of transferring a spare roll of binding material from the storage position to the feeding position in an agricultural baler according to the first aspect of the invention, the method comprising: lifting the second end of the spare roll away from the second support element while supporting the first end of the roll on the first support element, rotating the second end of the spare roll from the storage position to the loading position, and transferring the spare roll axially from the loading position to the feeding position.

Optionally, transferring the spare roll axially from the loading position to the feeding position comprises supporting the spare roll on a conveyor element adjacent the unwind station.

An embodiment of the invention will now be described, by way of example, with reference to the accompanying drawings, wherein:
Figure 1 is an isometric view of a round baler, showing the front and the left side of the baler;
Figure 2 is an isometric view of the round baler with a front cover and a side cover removed, and with a spare roll of bale binding material supported on each side of the baler;
Figure 3 is an isometric view of the round baler with the front cover and both side covers removed, with a roll of bale binding material in an unwind station and a spare roll of bale binding material supported on each side of the baler;
Figure 4 is an isometric view of the round baler with the front cover and both side covers removed, with a roll of bale binding material in an unwind station but no spare rolls of bale binding material;
Figure 5 is a top plan view of the round baler with the front cover and both side covers removed, with a roll of bale binding material in an unwind station and a spare roll of bale binding material supported on each side of the baler;
Figure 6 is top plan view of the round baler with the front cover and both side covers removed, with a roll of bale binding material in an unwind station but no spare rolls of bale binding material;
Figure 7 is a top plan view showing a support structure for spare roll of binding material, with the spare roll in a storage position, a loading position and a feeding position;
Figure 8 is a view in the direction of arrow VIII in figure 7, and
Figure 9 is a view in the direction of arrow IX in figure 7.

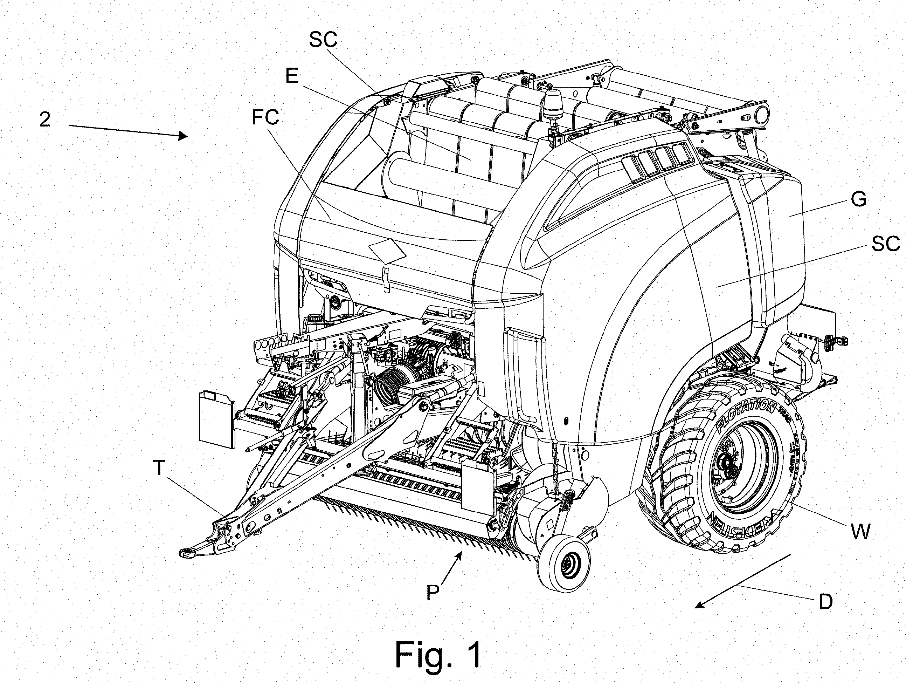

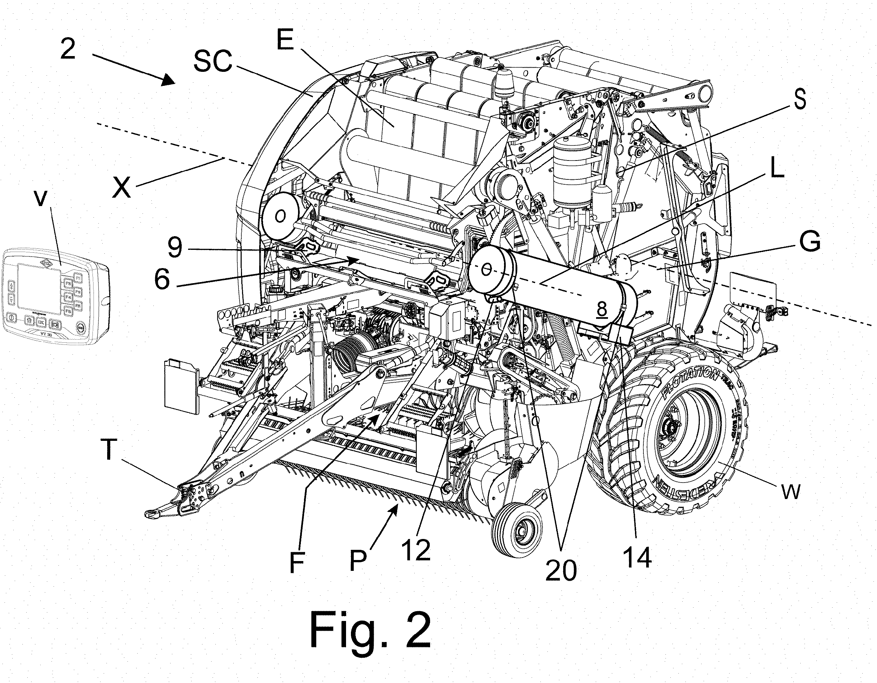

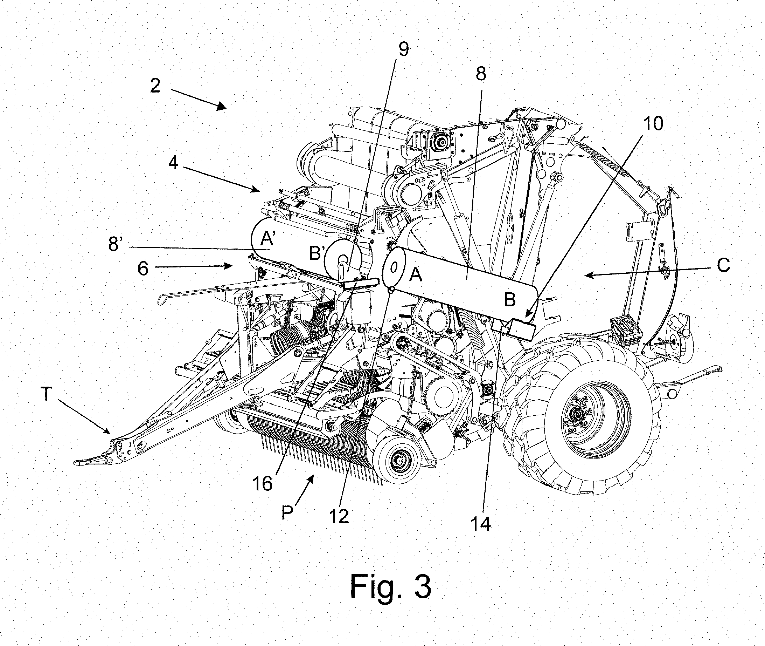

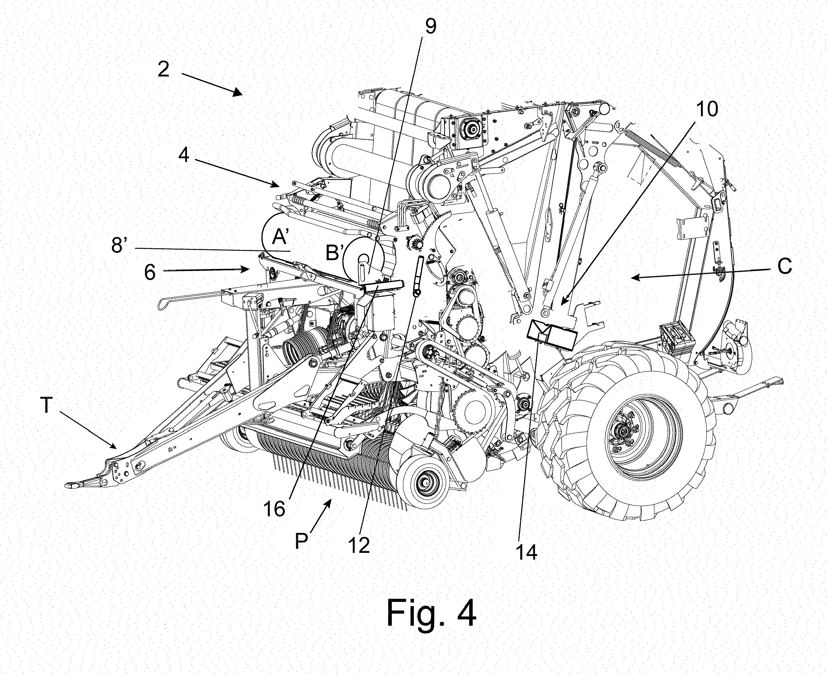

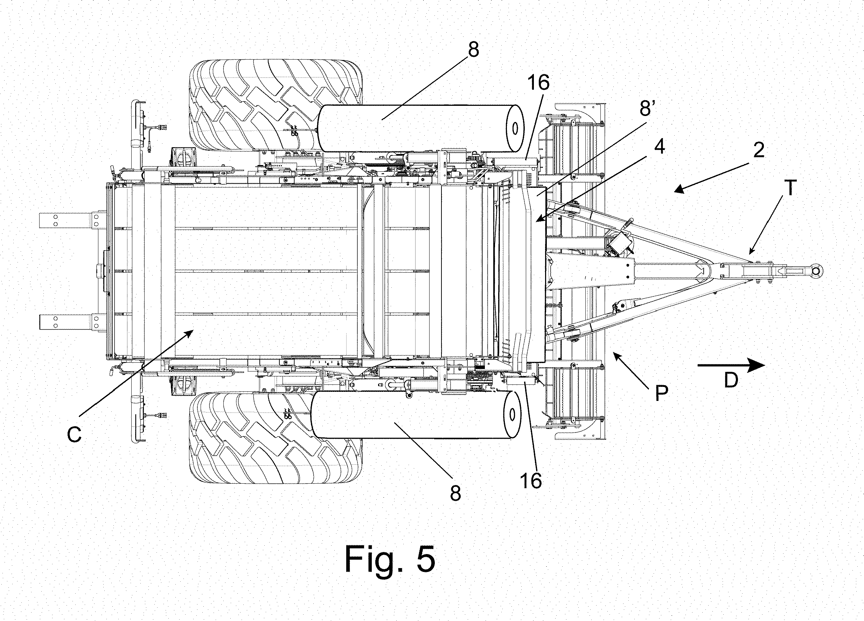

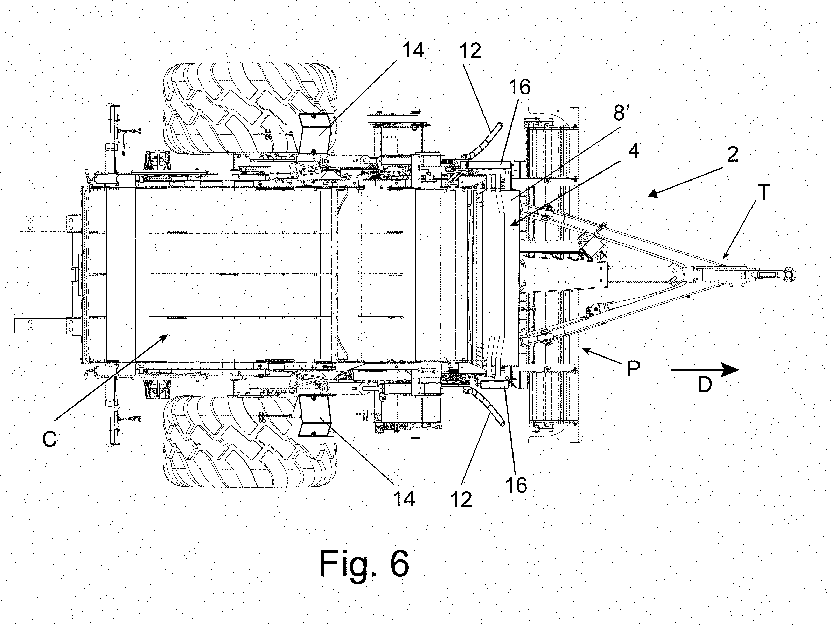

The round baler 2 shown in figures 1-6 comprises a bale chamber C including a plurality of pressing elements E for pressing an agricultural crop material in the bale chamber C to form a round bale, said bale chamber C having a rotational axis X and two sides S that are perpendicular to the rotational axis X. The baler 2 may also include a feed mechanism F for feeding crop material into the bale chamber C, and a tailgate G that can be opened to eject a bale from the bale chamber C. The baler 2 may be either a fixed chamber type or a variable chamber type, and the pressing elements E may be either rollers or belts, or a combination of rollers and belts. In the embodiment illustrated in the drawings the baler 2 is of the variable chamber type and the pressing elements E are belts. The baler 2 includes a front cover FC and two side covers SC that can be opened to allow access to the internal components of the baler.

The baler 2 may also optionally include a crop pick-up device P for picking up cut crop material from the ground, support wheels W and a tow bar or tongue T for coupling the baler 2 to a tow vehicle or tractor. Operation of the baler may be controlled via a control unit V located in the cab of the tractor. The features described above are all conventional in construction and operation and will not be described in further detail.

The baler 2 also includes a binding apparatus 4 for feeding a binding material of net or film into the bale chamber C during a binding operation to bind a bale in the bale chamber C. The binding apparatus 4 includes an unwind station 6 for supporting a roll 8' of binding material in a feeding position in which the longitudinal axis L of the roll 8' is substantially parallel to the rotational axis X of the bale chamber C. The unwind station 6 supports the roll 8' and enables rotation of the roll while binding material is drawn from the roll during the binding operation.

The ends of the unwind station 6 are defined by stop elements 9, which can engage the first and second ends A', B' of the roll 8' to restrict axial movement of a roll 8' in the unwind station 6. One or both of the stop elements 9 may be adjustable so that they can be located in a first configuration to restrict axial movement of a roll 8' in the feeding position or in a second configuration to allow axial movement of a spare roll 8 into the feeding position. The stop elements 9 may, for example, be adjustable between the first and second configurations by pivoting from an upright first configuration to a retracted second configuration, or by being removed in the second configuration.

The baler 2 also includes at least one support structure 10 for supporting a spare roll 8 of binding material in a storage position. The support structure 10 is located adjacent a side of the baler and it is configured to support the spare roll 8 in a storage position adjacent a side of the baler, for example so that the longitudinal axis L of the spare roll 8 is located approximately in a plane that is perpendicular to the rotational axis X of the bale chamber C. In an embodiment, the support structure 10 is configured to support the spare roll 8 in a storage position in which the longitudinal axis of the spare roll 8 subtends an angle in the range 0° to 10°, and preferably 0° to 5°, relative to a plane that is perpendicular to the rotational axis X of the bale chamber C.

One, two or more binding material support structures 10 may be provided on one or both sides of the baler 2. The support structures 10 serve to carry spare rolls 8 of binding material during operation of the baler. This removes the necessity to return to a storage site of spare rolls. Providing spare roll support structures 10 in this way prevents unnecessary loss of time during operation of the baler.

The support structure 10 may include a first support element 12 for supporting a first end A of the spare roll 8 and a second support element 14 for supporting a second end B of the spare roll 8. The first and second support elements 12, 14 may be configured to engage the spare roll 8 at or near to the two ends A, B of the spare roll 8.

The first support element 12 is preferably located adjacent an end of the unwind station 6, and is preferably located at substantially the same height as the unwind station 6. The second support element 14 may be located behind the first support element 12 (i.e. nearer to the rear of the baler) and is preferably lower that the first support element 12, so that the longitudinal axis L of a spare roll 8 in the storage position is inclined downwards from front to rear.

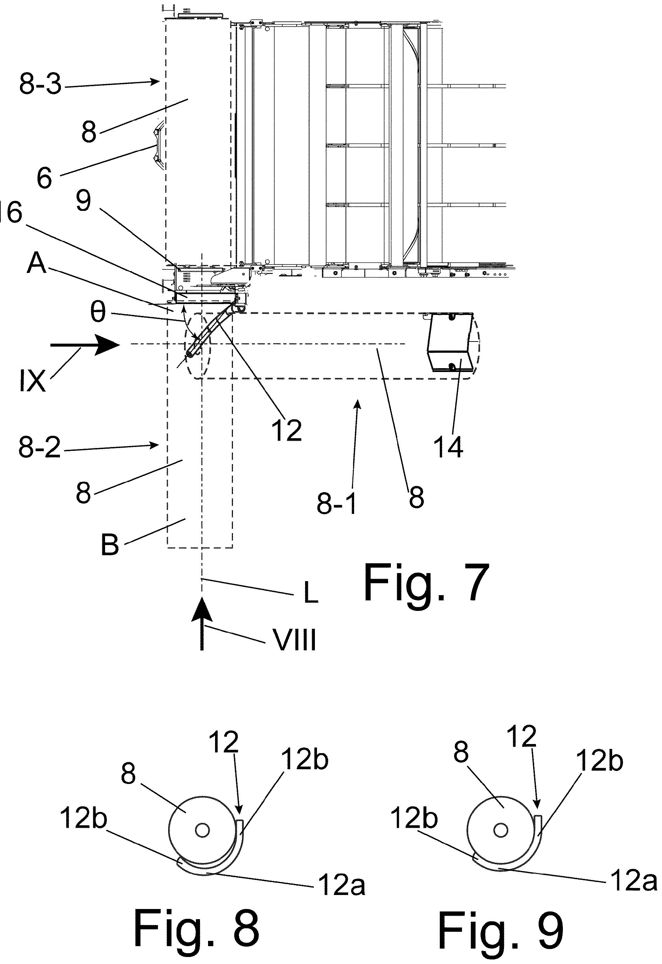

Preferably the first support element 12 for the first end A of the spare roll 8 is U-shaped or J-shaped so that it extends at least partially around the circumference of the cylindrical spare roll 8 to securely support the roll. An embodiment is illustrated in Figs. 7-9, wherein the first support element 12 for the first end A of the spare roll 8 has a round-bottomed J-shape and comprises a base support member 12a and a pair of lateral support members 12b of unequal height. The base support member 12a supports at least part of the weight of the spare roll 8 and the lateral support members 12b guide the spare roll 8 and prevent lateral movement of the spare roll relative to the base support member 12a.

In the embodiment illustrated in Figs. 1-9, the first support element 12 is fixed in position relative to the baler frame and may for example extend outwards from the side frame 15 of the baler frame at an angle θ of approximately 45-60 degrees, or preferably 50-55 degrees, relative to a plane N that is perpendicular to the rotational axis X of the bale chamber. The first support element 12 provides a fulcrum that enables rotation of the spare roll 8 around it first end A. This allows the first support element 12 to support the spare roll 8 as the spare roll 8 is rotated around vertical and horizontal axes from the storage position 8-1 to a loading position 8-2 in which the spare roll 8 is substantially aligned with and points towards the unwind station 6. Preferably a conveyor element 16, for example a conveyor wheel or a conveyor roller, is positioned between the first support element 12 for the first end A of the spare roll 8 and the unwind station 6, to assist with moving the spare roll from the loading position 8-2 to the feeding position 8-3 in the unwind station 6.

By arranging the first support element 12 so that it extends outwards from the side of the baler frame at an angle θ of approximately 45-60 degrees, the first support element 12 holds the spare roll 8 securely when it is in the storage position 8-1 and the loading position 8-2, and supports and guides the spare roll as it is transferred from the loading position 8-2 to the feeding position 8-3. This is illustrated in Figs. 7-9.

Fig. 7 shows the spare roll 8 in the storage position 8-1 where it is located adjacent the side frame 15 of the baler, in loading position 8-2 where it is aligned with the unwind station 6, and in the feeding position 8-3 within the unwind station 6. When the spare roll 8 is in the storage position 8-1 the first end A of the spare roll 8 is supported by the base support member 12a and supported laterally by the lateral support members 12b as illustrated in Fig. 9. This prevents lateral movement of the spare roll 8 when it is in the storage position 8-1.

When the spare roll 8 is rotated about the vertical and horizontal axes from the storage position 8-1 to the loading position 8-2, first end A of the spare roll is still supported and guided by the support member 12, as illustrated in Fig. 8. This allows the spare roll 8 to be moved easily from the loading position 8-2 to the feeding position 8-3 within the unwind station 6. Axial movement of the spare roll 8 from the loading position 8-2 to the feeding position 8-3 is assisted by the conveyor roller 16, which is positioned below the first end A of the spare roll 8 when the spare roll is in the loading position 8-2. In this example the angle θ is about 50 degrees, which causes the spare roll to lift slightly as it is rotated to the loading position 8-2. This is an optional feature. It should be noted that in this example the loading position 8-2 is axially aligned with the feeding position 8-3 in the unwind station 6. Again this is optional: it is not essential for the loading position 8-2 to be exactly aligned with the feeding position 8-3 providing that the bale points towards the unwind station, allowing it to be transferred from the loading position 8-2 to the feeding position 8-3.

Alternatively, the first support member 12 may have a round-bottomed U-shape, the first support element comprising a curved base support member and two curved lateral support members of equal length that extend upwards from the base support member. In this case the radius of curvature of the U-shape may be selected to be approximately equal to the radius of the spare roll 8 so that when the spare roll 8 is in the storage position 8-1 the first end A of the spare roll 8 is securely supported to prevent lateral movement of the spare roll.

In another embodiment the first support member 12 may have a square-bottomed U-shape or it may be substantially L-shaped, wherein the lowest part of the L-shape comprises the base support member, the upper arm of the L-shape comprises one lateral support member, and a structure to which the first support member is attached (for example the side frame 15 of the baler) comprises the other lateral support member.

Alternatively, the first support element 12 for the first end A of the spare roll 8 may be pivotable, for example about a vertical axis, allowing it to support the spare roll as it is rotated around vertical and horizontal axes from the storage position to the loading position.

The second support element 14 is a fixed support that is located adjacent the side of the baler 2. In the embodiment shown in the drawings the second support element 14 comprises a V-shaped support member that engages the cylindrical circumference of the spare roll 8 adjacent the second end B, and an upright end stop member that engages the end face of the spare roll 8 at the second end B to prevent axial movement of the spare roll 8.

In the embodiment shown in the drawings the first support element 12 and the second support element 14 comprise separate components that are attached separately to the side of the baler 2. Alternatively, the baler 2 could include a unitary support structure 10 that comprises the first support element 12 and the second support element 14.

Preferably a conveyor element 16, for example a wheel or a roller, is positioned between the fist support element 12 for the first end A and the unwind station 6, to assist in the shifting of the roll into the unwind station.

Optionally, one or more releasable securing elements 20, for example ties, belts, straps or clamps, may be provided for securing the spare roll 8 to the first and second support elements 12, 14.

### Operation

During a baling operation, crop material is fed into the bale chamber C by the feed mechanism F and rotated by the pressing elements E to form a round bale. Once the bale reaches a desired size and/or pressure, feeding is stopped and net or film binding material is fed into the bale chamber by the binding device 4 to bind the bale. The bale continues to rotate within the bale chamber during the binding operation so that the binding material is wrapped a required number of times around the cylindrical circumference of the bale. Once binding is complete the binding material is severed and the tailgate G is then opened and the bale is ejected from the bale chamber onto the ground. These operations are conventional and will not be described in further detail.

During a binding operation, the binding device 4 draws binding material from the roll 8' in the unwind station 6 and feeds the binding material into the bale chamber C. When the roll 8' of binding material in the unwind station 6 has been depleted, the operator must replenish the supply of binding material by loading a spare roll 8 of binding material into the unwind station 6.

When the spare roll 8 is required to be moved from the storage location to the unwind station 6, the stop element 9 that is closer to the storage position of the spare roll 8 is first removed or located in its retracted position. The second end B of the spare roll 8 is then lifted from the fixed second support 14, while the first end A of the spare roll 8 remains supported by the first support 12. The spare roll 8 is then pivoted around a substantially vertical axis defined by the first support 12 at the first end A, and at the same time the second end B is lifted to approximately the same height as the first end A. This brings the spare roll 8 into a loading position in which it is aligned with the unwind station 6. The spare roll 8 is then pushed longitudinally into the unwind station 6 of the binding device 4. The shifting in direction is substantially horizontal and parallel to the rotational axis X. The spare roll 8 may optionally be supported by a conveyor element such as a wheel or roller 16 located beside the binding device 4, to aid movement of the spare roll into the unwind station 6.

During the loading operation the operator only has to lift one end of the roll 8 (roll end B), as roll end A is supported throughout by the first support 12. Thus, the operator only has to carry half the weight of the roll 8.

The second support 14 is preferably located at a low height (less than the length of the roll) so that while loading a spare roll 8 onto the second support 14 the first end A of the roll can be supported by the ground while the second end B is lifted onto the second support 14. Typically, a roll of binding material has a length of 600mm and therefore the second support element 14 is preferably located at a height of less than 600mm above the ground. When the second end B has been located correctly on the second support 14, the first end A can be lifted onto the higher first support 12. Again, the operator only has to lift one end of the roll 8, and thus only has to carry half the weight of the roll.

Advantages provided by the invention include a simple design and easy handling of the spare roll 8.

It should be understood that any number of the features of the invention as described herein and as shown in the accompanying drawings may be combined in any single embodiment of the invention, even though the features are described herein only in relation to specific embodiments of the invention.

Furthermore, terms for components used herein should be given a broad interpretation that also encompasses equivalent functions and features. Descriptive terms should also be given the broadest possible interpretation; e.g. the term "comprising" as used in this specification means "consisting at least in part of" such that interpreting each statement in this specification that includes the term "comprising", features other than that or those prefaced by the term may also be present. Related terms such as "comprise" and "comprises" are to be interpreted in the same manner.

## Claims

1. An agricultural round baler comprising:
• a bale chamber (C) including a plurality of pressing elements (E) for pressing a crop material to form a bale, said bale chamber (C) having a rotational axis (X),
• a feed mechanism (F) for feeding crop material into the bale chamber,
• a binding apparatus (4) for feeding a binding material into the bale chamber during a binding operation to bind a bale in the bale chamber, said binding apparatus including an unwind station (6) for supporting a roll (8') of binding material in a feeding position in which a longitudinal axis of the roll is substantially parallel to the rotational axis X of the bale chamber (C), said unwind station enabling rotation of the roll while binding material is drawn from the roll during the binding operation,
• and a support structure (10) for supporting a spare roll (8) of binding material in a storage position in which the spare roll is supported adjacent a side (S) of the baler,
• **characterised in that** the support structure (10) includes a first support element (12) for supporting a first end (A) of the spare roll (8) in the storage position and a second support element (14) for supporting a second end (B) of the spare roll (8) in the storage position,
• wherein the first support element (12) is located adjacent an end of the unwind station (6),
• and the second support element (14) comprises a fixed support that is located adjacent the side of the baler,
• wherein the first support element (12) is configured to support the first end (A) of the spare roll (8) while the second end (B) of the spare roll (8) is lifted away from the second support element (14) and the spare roll (8) is moved from the storage position to a loading position in which the spare roll (8) is substantially aligned with the unwind station (6), enabling the spare roll (8) to be moved axially from the loading position to the feeding position.

2. An agricultural round baler according to claim 1, wherein the second support element (14) is located at a lower height than the first support element (12).

3. An agricultural round baler according to any one of the preceding claims, wherein the second support element (14) is located at a height of less than 600mm above ground level.

4. An agricultural round baler according to any one of the preceding claims, wherein the first support element (12) is configured to support the first end of the spare roll (8) while enabling the spare roll to be rotated about a vertical axis from the storage position to the loading position, and optionally wherein the first support element (12) is configured to enable the spare roll to be rotated about a vertical axis through an angle in the range 80° to 100°, or 85° to 95°.

5. An agricultural round baler according to any one of the preceding claims, wherein the first support element (12) is configured to enable the spare roll (8) to be rotated about a horizontal axis, and optionally wherein the first support element (12) is configured to enable the spare roll to be rotated about a horizontal axis through an angle in the range 30° to 60°, or 40° to 50°.

6. An agricultural round baler according to any one of claims 4 to 5, wherein the first support element (12) comprises a pair of lateral support members (12b).

7. An agricultural round baler according to claim 6, wherein the lateral support members (12b) are configured to support the spare roll when it is in the storage position and to guide the spare roll when the spare roll is transferred from the loading position to the feeding position.

8. An agricultural round baler according to any one of claims 4 to 7, wherein the first support element (12) is a fixed support element located adjacent the side of the baler.

9. An agricultural round baler according to claim 8, wherein the first support element (12) extends outwards from the side of the baler at an angle of 45-60 degrees relative to a plane that is perpendicular to the rotational axis (X) of the bale chamber (C).

10. An agricultural round baler according to any one of claims 1 to 7, wherein the first support element (12) is a movable support that is configured to pivot about a vertical axis.

11. An agricultural round baler according to any one of the preceding claims, wherein the first support element (12) is U-shaped or J-shaped.

12. An agricultural round baler according to any preceding claim, including at least one conveyor element (16) adjacent the unwind station (6) that facilitates axial movement of the spare roll from the loading position to the feeding position, and optionally wherein the conveyor element (16) comprises a roller or a wheel.

13. An agricultural round baler according to any preceding claim, including a stop element (9) adjacent an end of the unwind station, wherein the stop element (9) is configurable in a first configuration to restrict axial movement of a roll in the feeding position or in a second configuration to allow movement of a spare roll from the loading position to the feeding position.

14. A method of transferring a spare roll (8) of binding material from the storage position to the feeding position in an agricultural baler according to any one of the preceding claims, the method comprising: lifting the second end (B) of the spare roll (8) away from the second support element (14) while supporting the first end of the roll on the first support element (12), rotating the second end (B) of the spare roll (8) from the storage position to the loading position, and transferring the spare roll (8) axially from the loading position to the feeding position.

15. A method according to claim 14 wherein transferring the spare roll (8) axially from the loading position to the feeding position comprises supporting the spare roll on a conveyor element (16) adjacent the unwind station.

## Patentansprüche

1. Landwirtschaftliche Rundballenpresse, umfassend:
• eine Ballenkammer (C) mit einer Mehrzahl von Presselementen (E) zum Pressen von Erntegut, um einen Ballen zu formen, wobei die Ballenkammer (C) eine Drehachse (X) aufweist,
• einen Zufuhrmechanismus (F) für die Zufuhr von Erntegut in die Ballenkammer,
• eine Bindevorrichtung (4) für die Zufuhr eines Bindungsmaterials in die Ballenkammer während einem Bindevorgang, um einen Ballen in der Ballenkammer zu binden, wobei die Bindevorrichtung eine Abwickelstation (6) zum Tragen einer Rolle (8') von Bindematerial an einer Zufuhrposition aufweist, an welcher eine Längsachse der Rolle im Wesentlichen parallel zu der Drehachse X der Ballenkammer (C) ist, wobei die Abwickelstation eine Rotation der Rolle ermöglicht, während Bindematerial während dem Bindevorgang von der Rolle gezogen wird,
• und eine Trägerstruktur (10) zum Tragen einer Ersatzrolle (8) von Bindematerial an einer Lagerungsposition, an der die Ersatzrolle angrenzend an eine Seite (S) der Ballenpresse getragen wird,
• **dadurch gekennzeichnet, dass** die Trägerstruktur (10) ein erstes Trägerelement (12) zum Tragen eines ersten Endes (A) der Ersatzrolle (8) an der Lagerungsposition aufweist und ein zweites Trägerelement (14) zum Tragen eines zweiten Endes (B) der Ersatzrolle (8) an der Lagerungsposition,
• wobei das erste Trägerelement (12) angrenzend an ein Ende der Abwickelstation (6) angeordnet ist,
• und wobei das zweite Trägerelement (14) einen festen Träger umfasst, der angrenzend an die Seite der Ballenpresse angeordnet ist,
• wobei das erste Trägerelement (12) so gestaltet ist, dass es das erste Ende (A) der Ersatzrolle (8) trägt, während das zweite Ende (B) der Ersatzrolle (8) von dem zweiten Trägerelement (14) weggehend angehoben wird, und wobei die Ersatzrolle (8) aus der Lagerungsposition an eine Ladeposition bewegt wird, an der die Ersatzrolle (8) im Wesentlichen mit der Abwickelstation (6) ausgerichtet ist, was es ermöglicht, dass die Ersatzrolle (8) aus der Ladeposition axial an die Zufuhrposition bewegt werden kann.

2. Landwirtschaftliche Rundballenpresse nach Anspruch 1, wobei sich das zweite Trägerelement (14) auf einer niedrigeren Höhe als das erste Trägerelement (12) befindet.

3. Landwirtschaftliche Rundballenpresse nach einem der vorstehenden Ansprüche, wobei sich das zweite Trägerelement (14) auf einer Höhe von unter 600 mm oberhalb der Bodenhöhe befindet.

4. Landwirtschaftliche Rundballenpresse nach einem der vorstehenden Ansprüche, wobei das erste Trägerelement (12) so gestaltet ist, dass es das erste Ende der Ersatzrolle (8) trägt, während es ermöglicht, dass die Ersatzrolle um eine vertikale Achse aus der Lagerungsposition an die Ladeposition bewegt werden kann, und wobei das erste Trägerelement (12) optional so gestaltet ist, dass es ermöglicht, dass die Ersatzrolle um einen Winkel im Bereich von 80° bis 100° oder von 85° bis 95° um eine vertikale Achse gedreht werden kann.

5. Landwirtschaftliche Rundballenpresse nach einem der vorstehenden Ansprüche, wobei das erste Trägerelement (12) so gestaltet ist, dass es ermöglicht, dass die Ersatzrolle (8) um eine horizontale Achse gedreht wird, und wobei das erste Trägerelement (12) optional so gestaltet ist, dass es ermöglicht, dass die Ersatzrolle um einen Winkel im Bereich von 30° bis 60° oder von 40° bis 50° um eine horizontale Achse gedreht werden kann.

6. Landwirtschaftliche Rundballenpresse nach einem der Ansprüche 4 bis 5, wobei das erste Trägerelement (12) ein Paar lateraler Trägerelemente (12b) umfasst.

7. Landwirtschaftliche Rundballenpresse nach Anspruch 6, wobei die lateralen Trägerelemente (12b) so gestaltet sind, dass sie die Ersatzrolle tragen, wenn sich diese an der Lagerungsposition befindet, und dass sie die Ersatzrolle führen, wenn die Ersatzrolle aus der Lagerungsposition an die Zufuhrposition übertragen wird.

8. Landwirtschaftliche Rundballenpresse nach einem der Ansprüche 4 bis 7, wobei das erste Trägerelement (12) ein festes Trägerelement ist, das angrenzend an die Seite der Ballenpresse angeordnet ist.

9. Landwirtschaftliche Rundballenpresse nach Anspruch 8, wobei sich das erste Trägerelement (12) von der Seite der Ballenpresse in einem Winkel von 45 bis 60 Grad im Verhältnis zu einer Ebene, die senkrecht zu der Drehachse (X) der Ballenkammer (C) ist, auswärts erstreckt.

10. Landwirtschaftliche Rundballenpresse nach einem der Ansprüche 1 bis 7, wobei das erste Trägerelement (12) ein beweglicher Träger ist, der so gestaltet ist, dass er sich um eine vertikale Achse dreht.

11. Landwirtschaftliche Rundballenpresse nach einem der vorstehenden Ansprüche, wobei das erste Trägerelement (12) U-förmig oder J-förmig ist.

12. Landwirtschaftliche Rundballenpresse nach einem der vorstehenden Ansprüche, das mindestens ein Förderelement (16) angrenzend an die Abwickelstation (6) umfasst, das die axiale Bewegung der Ersatzrolle aus der Entladeposition an die Zufuhrposition erleichtert, und wobei das Förderelement (16) optional eine Rolle oder ein Rad umfasst.

13. Landwirtschaftliche Rundballenpresse nach einem der vorstehenden Ansprüche, das ein Stoppelement (9) angrenzend an ein Ende der Abwickelstation umfasst, wobei das Stoppelement (9) in einer ersten Gestalt gestaltet werden kann, um die axiale Bewegung einer Rolle an der Zufuhrposition zu beschränken, oder in einer zweiten Gestalt, um eine Bewegung einer Ersatzrolle aus der Ladeposition an die Zufuhrposition zu ermöglichen.

14. Verfahren zum Übertragen einer Ersatzrolle (8) von Bindematerial aus der Lagerungsposition an die Zufuhrposition in einer landwirtschaftlichen Ballenpresse gemäß einem der vorstehenden Ansprüche, wobei das Verfahren folgendes umfasst: Anheben des zweiten Endes (B) der Ersatzrolle (8) weggehend von dem zweiten Trägerelement (14), während das erste Ende (A) der Rolle an dem ersten Trägerelement (12) getragen wird, Drehen des zweiten Endes (B) der Ersatzrolle (8) aus der Lagerungsposition an die Ladeposition, und Übertragen der Ersatzrolle (8) axial aus der Ladeposition an die Zufuhrposition.

15. Verfahren nach Anspruch 14, wobei das Übertragen der Ersatzrolle (8) axial aus der Ladeposition an die Zufuhrposition das Tragen der Ersatzrolle an einem Förderelement (16) angrenzend an die Abwickelstation umfasst.

## Revendications

1. Roto-presse agricole comprenant :
• une chambre à balles (C) comprenant une pluralité d'éléments de pression (E) pour presser un matériau de récolte afin de former une balle, ladite chambre à balles (C) ayant un axe de rotation (X),
• un mécanisme d'alimentation (F) pour alimenter le matériau de récolte dans la chambre à balles,
• un appareil de liage (4) pour alimenter un matériau de liage dans la chambre à balles pendant une opération de liage pour lier une balle dans la chambre à balles, ledit appareil de liage comprenant une station de déroulement (6) pour supporter un rouleau (8') de matériau de liage dans une position d'alimentation dans laquelle un axe longitudinal du rouleau est sensiblement parallèle à l'axe de rotation X de la chambre à balles (C), ladite station de déroulement permettant la rotation du rouleau tandis que le matériau de liage est tiré du rouleau pendant l'opération de liage,
• et une structure de support (10) pour supporter un rouleau de rechange (8) de matériau de liage dans une position de stockage dans laquelle le rouleau de rechange est supporté de manière adjacente à un côté (S) de la presse à balles,
• **caractérisée en ce que** la structure de support (10) comprend un premier élément de support (12) pour supporter une première extrémité (A) du rouleau de rechange (8) dans la position de stockage et un second élément de support (14) pour supporter une seconde extrémité (B) du rouleau de rechange (8) dans la position de stockage,
• le premier élément de support (12) étant situé de manière adjacente à une extrémité de la station de déroulement (6),
• et le second élément de support (14) comprenant un support fixe qui est situé à proximité du côté de la presse à balles,
• le premier élément de support (12) étant conçu pour supporter la première extrémité (A) du rouleau de rechange (8) tandis que la seconde extrémité (B) du rouleau de rechange (8) est soulevée à l'opposé du second élément de support (14) et le rouleau de rechange (8) est déplacé de la position de stockage à une position de chargement dans laquelle le rouleau de rechange (8) est sensiblement aligné avec la station de déroulement (6), permettant au rouleau de rechange (8) d'être déplacé axialement de la position de chargement à la position d'alimentation.

2. Roto-presse agricole selon la revendication 1, le second élément de support (14) étant situé à une hauteur inférieure à celle du premier élément de support (12).

3. Roto-presse agricole selon l'une quelconque des revendications précédentes, le second élément de support (14) étant situé à une hauteur inférieure à 600 mm au-dessus du niveau du sol.

4. Roto-presse agricole selon l'une quelconque des revendications précédentes, le premier élément de support (12) étant conçu pour supporter la première extrémité du rouleau de rechange (8) tout en permettant au rouleau de rechange d'être tourné autour d'un axe vertical de la position de stockage à la position de chargement, et éventuellement le premier élément de support (12) étant conçu pour permettre au rouleau de rechange d'être tourné autour d'un axe vertical selon un angle dans la plage de 80° à 100°, ou de 85° à 95°.

5. Roto-presse agricole selon l'une quelconque des revendications précédentes, le premier élément de support (12) étant conçu pour permettre au rouleau de rechange (8) d'être tourné autour d'un axe horizontal, et éventuellement le premier élément de support (12) étant conçu pour permettre au rouleau de rechange d'être tourné autour d'un axe horizontal selon un angle dans la plage de 30° à 60°, ou de 40° à 50°.

6. Roto-presse agricole selon l'une quelconque des revendications 4 à 5, le premier élément de support (12) comprenant une paire d'éléments de support latéraux (12b).

7. Roto-presse agricole selon la revendication 6, les éléments de support latéraux (12b) étant conçus pour supporter le rouleau de rechange lorsqu'il est dans la position de stockage et pour guider le rouleau de rechange lorsque le rouleau de rechange est transféré de la position de chargement à la position d'alimentation.

8. Roto-presse agricole selon l'une quelconque des revendications 4 à 7, le premier élément de support (12) étant un élément de support fixe situé à proximité du côté de la presse à balles.

9. Roto-presse agricole selon la revendication 8, le premier élément de support (12) s'étendant vers l'extérieur depuis le côté de la presse à balles selon un angle de 45 à 60 degrés par rapport à un plan qui est perpendiculaire à l'axe de rotation (X) de la chambre à balles (C).

10. Roto-presse agricole selon l'une quelconque des revendications 1 à 7, le premier élément de support (12) étant un support mobile qui est conçu pour pivoter autour d'un axe vertical.

11. Roto-presse agricole selon l'une quelconque des revendications précédentes, le premier élément de support (12) étant en forme de U ou en forme de J.

12. Roto-presse agricole selon l'une quelconque des revendications précédentes, comprenant au moins un élément de convoyeur (16) adjacent à la station de déroulement (6) qui facilite le mouvement axial du rouleau de rechange de la position de chargement à la position d'alimentation, et éventuellement l'élément de convoyeur (16) comprenant un rouleau ou une roue.

13. Roto-presse agricole selon l'une quelconque des revendications précédentes, comprenant un élément d'arrêt (9) adjacent à une extrémité de la station de déroulement, l'élément d'arrêt (9) pouvant être conçu dans une première configuration pour limiter le mouvement axial d'un rouleau dans la position d'alimentation ou dans une seconde configuration pour permettre le mouvement d'un rouleau de rechange de la position de chargement à la position d'alimentation.

14. Procédé de transfert d'un rouleau de rechange (8) de matériau de liage de la position de stockage à la position d'alimentation dans une presse à balles agricole selon l'une quelconque des revendications précédentes, le procédé comprenant les étapes consistant à : soulever la seconde extrémité (B) du rouleau de rechange (8) à l'opposé du second élément de support (14) tout en supportant la première extrémité (A) du rouleau sur le premier élément de support (12), faire tourner la seconde extrémité (B) du rouleau de rechange (8) de la position de stockage à la position de chargement, et transférer le rouleau de rechange (8) axialement de la position de chargement à la position d'alimentation.

15. Procédé selon la revendication 14, le transfert du rouleau de rechange (8) axialement de la position de chargement à la position d'alimentation comprenant l'étape consistant à supporter le rouleau de rechange sur un élément de convoyeur (16) adjacent à la station de déroulement.
